# EUROPEAN PATENT APPLICATION

(11) **EP 4 456 262 A1**
(43) Date of publication of application: **30.10.2024**
(21) Application number: 22954389.7
(22) Date of filing: 10.08.2022
(51) Int. Cl.: H01M 10/6566, H01M 10/6568, H01M 10/613

(54) **BATTERY AND ELECTRICAL DEVICE**

(71) Applicant: Contemporary Amperex Technology Co., Limited, Ningde, Fujian 352100 (CN)
(72) Inventor: LONG, Chao, Ningd, Fujian 352100 (CN); ZHANG, Wenhui, Ningde, Fujian 352100 (CN); CHEN, Xingdi, Ningde, Fujian 352100 (CN); WANG, Peng, Ningde, Fujian 352100 (CN)
(74) Representative: Ran, Handong
(86) International application number: PCT/CN2022/111347
(87) International publication number: WO 2024/031413

(57) **Abstract**

Embodiments of the present application provide a battery and an electrical device. The battery comprises a battery box, battery modules, and a thermal management assembly. The battery modules are arranged in the battery box; two or more battery modules are arranged in a first direction; each battery module comprises two or more battery cells arranged in a second direction; the second direction is perpendicular to the first direction; each battery cell comprises a first side wall and a second side wall connected to each other; the first side wall is a wall having the largest area among all the outer walls of the battery cells; the first direction is perpendicular to the first side wall; and the second side walls of two adjacent battery cells are oppositely arranged in the second direction. The thermal management assembly comprises two or more heat exchanger plates distributed in the first direction, and each heat exchanger plate is connected to the first side wall of the battery cell to adjust the temperature of the battery cell. According to the embodiments of the present application, the space utilization rate can be improved and lightweight design can be realized while meeting requirements of thermal management and structural strength.

## Description

### Technical Field

The present application relates to the technical field of batteries, and in particular, to a battery and a power consuming device.

### Background Art

Achieving energy conservation and emission reduction is the key to the sustainable development of the automotive industry. Electric vehicles have become an important part of the sustainable development of the automotive industry due to their advantages in energy conservation and environmental protection. For the electric vehicles, the battery technology is an important factor to their development.

In existing battery manufacturing processes, a cooling structure and a reinforcement structure are usually provided to meet the requirements of heat dissipation effect and structural strength. However, such an arrangement may lead to too low utilization of an internal space of a battery and cannot meet the requirement of lightweight.

### Summary of the Invention

The present application provides a battery and a power consuming device. The battery can improve space utilization and realize a lightweight design while meeting the requirements of thermal management and structural strength.

In a first aspect, an embodiment of the present application provides a battery, comprising a case, battery modules, and a thermal management assembly. The battery modules are arranged inside the case. Two or more battery modules are provided and are arranged in a first direction, and each of the battery modules comprises two or more battery cells arranged in a second direction. The second direction is perpendicular to the first direction. Each of the battery cells comprises a first side wall and a second side wall connected to each other, and the first side wall is a wall of all outer walls of the battery cell that has the largest area. The first direction is perpendicular to the first side wall, and the second side walls of two adjacent battery cells are oppositely arranged in the second direction. The thermal management assembly comprises two or more heat exchange plates distributed in the first direction, wherein the heat exchange plates are connected to the first side walls of the battery cells to adjust the temperature of the battery cells.

In the embodiment of the present application, with the arrangement of the thermal management assembly, the two or more heat exchange plates comprised by the thermal management assembly are connected to the first side walls of the battery cells to adjust the temperature of the battery cells, so as to be able to meet the requirement of thermal management of the battery cells. In addition, the heat exchange plates of the thermal management assembly can be used as structural parts of the case to increase the structural strength demand of the entire battery, thereby eliminating the arrangements of the transverse and longitudinal beams inside the case, achieving high integration, reducing the cost, improving the space utilization of the case, and realizing the lightweight design. Moreover, the first side wall is a wall of all outer walls of the battery cell that has the largest area, and the heat exchange plate can better exchange heat with the battery cell to adjust the temperature of the battery cell and increase thermal management efficiency.

In some embodiments, the heat exchange plates are bonded and fixed to the first side walls of the battery cells.

In this configuration, a connection strength and connection stability between the heat exchange plates and the battery cells is improved, thus ensuring the safety and reliability of the battery. Moreover, the heat exchange plates and the battery cells are connected as one piece by bonding, which can also increase the thermal management efficiency of the battery cells, and adjacent battery modules are arranged more compactly to improve the space utilization of the case.

In some embodiments, the heat exchange plates are sandwiched between two adjacent battery modules.

In this configuration, the thermal management efficiency of the battery cells and the structural strength demand of the entire battery can be better increased.

In some embodiments, the thermal management assembly further comprises a connecting pipe set, wherein the heat exchange plates each are internally provided with a medium flow channel, and the connecting pipe set is configured for communication between the medium flow channels of the two or more heat exchange plates.

With the arrangement of the connecting pipe set and the communication between the medium flow channels of the two or more heat exchange plates and the connecting pipe set, it is unnecessary for each heat exchange plate to be correspondingly provided with a pipeline directly connected to the apparatus for providing the heat exchange medium, and the structure of the thermal management assembly can be simplified and the space utilization of the case can be improved while the requirement of providing the heat exchange medium for each heat exchange plate for effective thermal management of each battery cell is met.

In some embodiments, the connecting pipe set comprises a connecting channel, an inlet pipe, and an outlet pipe, wherein in the first direction, the medium flow channels of two adjacent heat exchange plates are in communication with each other by means of the connecting channel, and the inlet pipe and the outlet pipe are in communication with the medium flow channel of the same heat exchange plate.

In this configuration, the demand of the heat exchange plates for the heat exchange medium can be met only by means of one inlet pipe and one outlet pipe, which reduces a space occupancy rate of the connecting pipe set, can simplify the structure of the connecting pipe set, facilitates assembly and replacement, may be suitable for supplying the heat exchange media for different numbers of heat exchange plates, and improves the flexibility and universality.

In some embodiments, through holes are provided in the case, and the inlet pipe and the outlet pipe each extend from the case through the through holes.

The inlet pipe and the outlet pipe can extend outside of the case through the through holes, that is, an external heat exchange medium can enter the case through the inlet pipe and flow from the case through the outlet pipe, which facilitates the acquisition and discharge of the heat exchange medium, and can reduce the risk of leakage of the heat exchange medium in the case, thus ensuring the safety and reliability of the battery.

In some embodiments, the heat exchange plate has a top wall and a bottom wall that are oppositely arranged in the first direction, and side walls connected to the top wall and the bottom wall, the top wall, the medium flow channel being enclosed by the top wall, the bottom wall and the side walls. Under a predetermined pressure, the top wall and the bottom wall can at least partially move close to each other in the first direction to absorb an expansion force of the battery cells.

In the embodiment of the present application, when the battery cells expand during operation and exert an acting force on the heat exchange plates that exceeds the predetermined pressure, the heat exchange plates can deform to absorb an expansion force of the battery cells, so as to improve the safety performance of the battery. The heat exchange plates can be always attached to the first side walls of the battery cells, so that the thermal management effect can be ensured, and the connection between the battery cells and the heat exchange plates is more compact, thereby increasing the connection strength.

In some embodiments, the heat exchange plate comprises a support assembly arranged in the medium flow channel, the support assembly comprising a plurality of first support members distributed spaced apart from each other in a height direction of the case, the first support members each being connected to the top wall and the bottom wall, and the first support members being arranged at an angle and forming an included angle less than 90° with one of the top wall and the bottom wall.

The arrangement of the support assembly contributes to the improvement of the supporting effect for the heat exchange plate, thereby avoiding the risk of the top wall being attached to the bottom wall due to the absorption of the expansion force by the heat exchange plate, and ensuring the effectiveness of the medium flow channel. Moreover, the first support members are arranged at an angle, and form an included angle less than 90° with one of the top wall and the bottom wall, such that the first support members can be better deformed to meet the requirement of absorbing the expansion force by the heat exchange plate. In addition, the first support members may also be made of reinforcing ribs to realize the lightweight design.

In some embodiments, the first support members are of a plate-like structure, which facilitates the production and machining, improvement of manufacturing efficiency, and bending deformation to meet the requirement of absorbing the expansion force of the battery cells by the heat exchange plate.

In some embodiments, the support assembly further comprises a plurality of second support members distributed spaced apart in the height direction of the case, an extension dimension of each of the second support members in the first direction being less than a distance between the top wall and the bottom wall, and the second support members being connected to at least one of the top wall and the bottom wall.

By arranging the second support members and setting their extension dimensions in the first direction to be less than the distance between the top wall and the bottom wall, the second support members can act with the first support member to achieve a better supporting effect, and can also control the deformation range of the heat exchange plate. When the second support members on one of the top wall and the bottom wall come into contact with the other of the top wall and the bottom wall, the deformation of the heat exchange plate can be further limited, which avoids the blockage of the medium flow channel, and ensures the effectiveness of the medium flow channel and thus the effectiveness of the heat exchange plate.

In some embodiments, the second support members are in the form of a polygon prism, which allows the second support members to have an enough contact area with the top wall or the bottom wall, so as to better ensure that the medium flow channel will not be blocked, and ensure that the heat exchange plate can operate normally.

In some embodiments, the first support members and the second support members are alternately distributed in the height direction of the case.

In this configuration, the uniformity of the supporting effect on the top wall and the bottom wall of the heat exchange plate can be ensured, and each section of a cooling channel in the second direction will not be blocked, which can better ensure the effectiveness of the medium flow channel.

In some embodiments, the battery further comprises a limiting member arranged inside the case and fixedly connected to the case, wherein the limiting member is configured to limit the deformation of the battery cells in the first direction.

In the embodiment of the present application, the limiting member can position the battery cells and the thermal management assembly, which contributes to the mounting efficiency and mounting accuracy, thus ensuring good quality of the battery. Moreover, the limiting member can also act with the heat exchange plate to better limit the deformation of the battery cells in the first direction, thereby ensuring the safety performance of the battery.

In some embodiments, the limiting member comprises a limiting beam extending in the second direction, two ends of the limiting beam in the second direction being connected to the case, and the limiting plate abutting against the heat exchange plate and is connected to the heat exchange plate.

The limiting member being provided in the form of the limiting beam is conducive to saving a space for arranging the limiting beam, allows the case to accommodate more battery cells, and improves the internal space utilization of the case.

In some embodiments, the battery further comprises a busbar member and two output members, wherein the busbar member is configured to electrically connect two adjacent battery cells, and the two output members are arranged on the same side in the first direction. The battery module located on the outermost side in the first direction is provided with two output ends, the two output ends are distributed in the second direction, and the two output members are respectively electrically connected to the two output ends to form a power supply path together with the busbar member.

Battery cells of two adjacent battery modules can be electrically connected to each other by means of the busbar member, so that a plurality of battery cells of the battery modules are connected in series, in parallel or in both series and parallel. The two output members are respectively electrically connected to the two output ends and are arranged on the same side in the first direction to form a power supply path together with the busbar member, which avoids use of a large output member across the battery module, and is beneficial to improving the compactness and energy density of the battery cells.

In some embodiments, the two output ends are respectively arranged on two battery cells of the outermost battery module that are located at ends in the second direction, which is conducive to ensuring that the two output members are arranged on the same side in the first direction, so that the two output members and the two output ends form output interfaces to be connected to an external power consuming device.

In some embodiments, an output member base is provided on the limiting member, and the output member base is arranged on the limiting member to support the output member.

In this configuration, the mounting and fixation of the output member are facilitated, and contact short circuit can also be avoided, thereby ensuring the safety performance of the battery.

In some embodiments, an accommodating notch is provided in the limiting member, and the output member base at least partially extends into the accommodating notch.

The accommodating notch can function to limit the output member base to prevent the output member base from being displaced, which otherwise causes safety problems of the battery. In addition, the accommodating notch can also have the function of positioning to facilitate the mounting of the output member base and improve the manufacturing efficiency.

In some embodiments, the case comprises a top cover, a bottom cover, and an accommodating frame, the bottom cover and the top cover being oppositely arranged at two ends of the accommodating frame in the height direction of the case, and the limiting member being connected to the accommodating frame and at least one of the top cover and the bottom cover.

The top cover, the bottom cover and the accommodating frame can form an enclosed space for placing battery cells therein, thus ensuring to meet the sealing requirement, being conducive to processing, manufacturing and assembly, and further increasing the structural strength. Moreover, the limiting member is connected to the accommodating frame and at least one of the top cover and the bottom cover, so that the overall structure of the battery can be configured according to different requirements, and the universality is improved.

In some embodiments, the case further comprises a connecting seat arranged protruding from the accommodating frame in the second direction, the connecting seat being configured to mount the battery in a power consuming device.

The arrangement of the connecting seat facilitates the connection and fixation of the entire battery in a power consuming device in which the battery is applied, and the safety performance of the battery is ensured.

In a second aspect, an embodiment of the present application provides a power consuming device, comprising a battery according to any one of the foregoing implementations. The battery is configured to provide electric energy to allow the power consuming device to operate normally.

### Brief Description of the Drawings

In order to more clearly illustrate the technical solutions of the embodiments of the present application, the accompanying drawings required in the embodiments of the present application will be briefly described below. Obviously, the accompanying drawings described below are merely some embodiments of the present application, and for those of ordinary skill in the art, other accompanying drawings can be obtained from these accompanying drawings without making creative efforts.
FIG. 1 is a schematic structural diagram of a vehicle according to an embodiment of the present application;
FIG. 2 is a schematic exploded view of a battery according to an embodiment of the present application;
FIG. 3 is a schematic partial exploded view of a battery according to an embodiment of the present application;
FIG. 4 is a schematic exploded view of a battery cell according to an embodiment of the present application.
FIG. 5 is a partial top view of a battery according to an embodiment of the present application;
FIG. 6 is a top view of a thermal management assembly of a battery according to an embodiment of the present application; and
FIG. 7 is a cross-sectional view taken along line A-A of FIG. 6.

In the accompanying drawings, the figures are not drawn to scale.

In the figures:
1000 - Vehicle; 100 - Battery; 200 - Controller; 300 - Motor;
10 - Case; 10a - Opening; 11 - Bottom cover; 12 - Accommodating frame; 13 - Connecting seat;
20 - Battery module; 21 - Battery cell; 211 - First side wall; 212 - Second side wall; 213 - Busbar member; 214 - Output member base; 215 - Output member;
201 - End cap; 201a - Electrode terminal; 202 - Housing; 203 - Electrode assembly; 203a - Positive electrode tab; 203b - Negative electrode tab; 30 - Top cover;
40 - Thermal management assembly; 41 - Heat exchange plate; 41a - Medium flow channel; 41b - Top wall; 41c - Bottom wall; 41d - Side wall; 411 - Support assembly; 4111 - First support member; 4112 - Second support member; 42 - Connecting pipe set; 421 - Connecting channel; 422 - Inlet pipe; 423 - Outlet pipe;
50 - Limiting member; 51 - Accommodating notch;
X - First direction; Y - Second direction; Z - Height direction.

### Detailed Description of Embodiments

Embodiments of the technical solutions of the present application will be described in detail below with reference to the accompanying drawings. The following embodiments are merely intended to more clearly illustrate the technical solutions of the present application, so they merely serve as examples, but are not intended to limit the scope of protection of the present application.

It should be noted that, unless otherwise specified, the technical terms or scientific terms used in the embodiments of the present application shall have ordinary meanings understood by those skilled in the art to which the embodiments of the present application belong.

In the description of the embodiments of the present application, the orientation or position relationship indicated by the technical terms "central", "longitudinal", "transverse", "length", "width", "thickness", "upper", "lower", "front"; "rear", "left", "right", "vertical", "horizontal", "top", "bottom", "inner", "outer", "clockwise", "counterclockwise", "axial", "radial", "circumferential", etc. are based on the orientation or position relationship shown in the drawings and are merely intended to facilitate and simplify the description of the embodiments of the present application, rather than indicating or implying that the device or element considered must have a particular orientation or be constructed and operated in a particular orientation, and therefore not to be construed as limiting the embodiments of the present application.

In addition, the technical terms "first", "second", etc. are merely for the purpose of description, and shall not be understood as any indication or implication of relative importance or any implicit indication of the number of technical features indicated. In the description of the embodiments of the present application, the phrase "a plurality of" means two or more, unless otherwise explicitly and specifically defined.

In the description of the embodiments of the present application, unless otherwise explicitly specified and defined, the technical terms such as "mounting", "connecting", "connection" and "fixing" should be understood in a broad sense, for example, they may be a fixed connection, a detachable connection, or an integrated connection; may be a mechanical connection or an electrical connection; and which may be direct connection or indirect connection by means of an intermediate medium, and may be communication between the interiors of two elements or the interaction relationship between the two elements. For those of ordinary skill in the art, the specific meanings of the above terms in the embodiments of the present application can be understood according to specific situations.

In the description of the embodiments of the present application, unless otherwise explicitly specified and defined, a first feature being "above" or "below" a second feature may be direct contact between the first feature and the second feature, or indirect contact between the first feature and the second feature by means of an intermediate medium. In addition, the first feature being "above", "over", and "on" the second feature may refer to the first feature being directly above or obliquely above the second feature, or simply means that the level of the first feature is higher than that of the second feature. The first feature being "below", "beneath", and "under" the second feature may refer to the first feature being directly below and obliquely below the second feature, or simply means that the level of the first feature is less than that of the second feature.

At present, from the perspective of the development of the market situation, traction batteries are used increasingly widely. The traction batteries are not only used in energy storage power systems such as hydroelectric power plants, thermal power plants, wind power plants and solar power plants, but also widely used in electric transportation means such as electric bicycles, electric motorcycles and electric vehicles and in many fields such as military equipment and aerospace. With the continuous expansion of the application field of traction batteries, the market demand for the traction batteries is also expanding.

The applicants have noted that in order to increase a structural strength of an existing battery, transverse and longitudinal beams are usually provided inside the battery to increase the rigidity and the strength. In addition, a structure, such as a water-cooled plate, is arranged on a side inside the battery to achieve heat dissipation and cooling of the battery. Moreover, a thermal insulation pad is provided between two adjacent battery cells to prevent heat from spreading, after thermal runaway of one battery cell, to the adjacent battery cell. Further, in order to avoid performance degradation caused by an expansion force of battery cells, it is further necessary to reserve an expansion gap between two adjacent battery cells. However, with the above arrangements, while the above performance is met, the lightweight design of the battery cannot be ensured, the compactness of the battery is reduced, and the effective space utilization is reduced.

In order to improve space utilization and realize a lightweight design while the requirements of thermal management and structural strength are met, the applicants have found through research that the structure and arrangement of the battery can be improved.

Based on the above considerations, in order to realize the lightweight design and improve compactness while the requirements of thermal management and structural strength are met, the applicants design a battery through in-depth research.

In such a battery, battery modules are arranged inside a case to meet the sealing requirement. Two or more battery modules are distributed in a first direction of the case. Each of the battery modules comprises two or more battery cells distributed in a second direction of the case. Second side walls of two adjacent battery cells are oppositely arranged in the second direction, and first side walls thereof are connected to heat exchange plates comprised by a thermal management assembly, so as to adjust the temperature of the battery cells and meet requirement of thermal management of the battery cells. In addition, in this configuration, the heat exchange plate can also be used as a structural member of the case to meet the requirement of structural strength, thereby eliminating the arrangements of transverse and longitudinal beams inside the case, achieving high integration, reducing the cost, improving the space utilization of the case, and realizing the lightweight design. Moreover, the first side wall is a wall of all outer walls of the battery cell that has the largest area, and the heat exchange plate can better exchange heat with the battery cell to increase the thermal management efficiency. Further, with the above configuration, the case of damages or even liquid leakage of the heat exchange plate caused by working conditions such as collision when the heat exchange plate is arranged on only one side inside the case can be prevented, thereby ensuring the safety performance of the battery.

The technical solution described in the embodiment of the present application is applicable to a power consuming device using a battery.

The power consuming device may be a vehicle, a mobile phone, a portable device, a notebook computer, a ship, a spacecraft, an electric toy, an electric tool, etc. The vehicle may be a fuel vehicle, a gas vehicle or a new-energy vehicle. The new-energy vehicle may be a battery electric vehicle, a hybrid vehicle, an extended-range vehicle, or the like. The spacecraft comprises an airplane, a rocket, an aerospace plane, a spaceship, etc. The electric toy comprises a stationary or mobile electric toy, such as a game machine, an electric toy car, an electric toy ship, and an electric toy airplane. The electric tool includes a metal cutting electric tool, a grinding electric tool, an assembling power tool, and a railway power tool, such as an electric drill, an electric grinder, an electric wrench, an electric screwdriver, an electric hammer, an electric impact drill, a concrete vibrator, and an electric planer. The foregoing power consuming devices are not specifically limited in the embodiments of the present application.

It should be understood that the technical solutions described in the embodiments of the present application are not merely applicable to the power consuming devices described above. However, for the sake of brevity, the following embodiments will be described by taking an electric vehicle as an example.

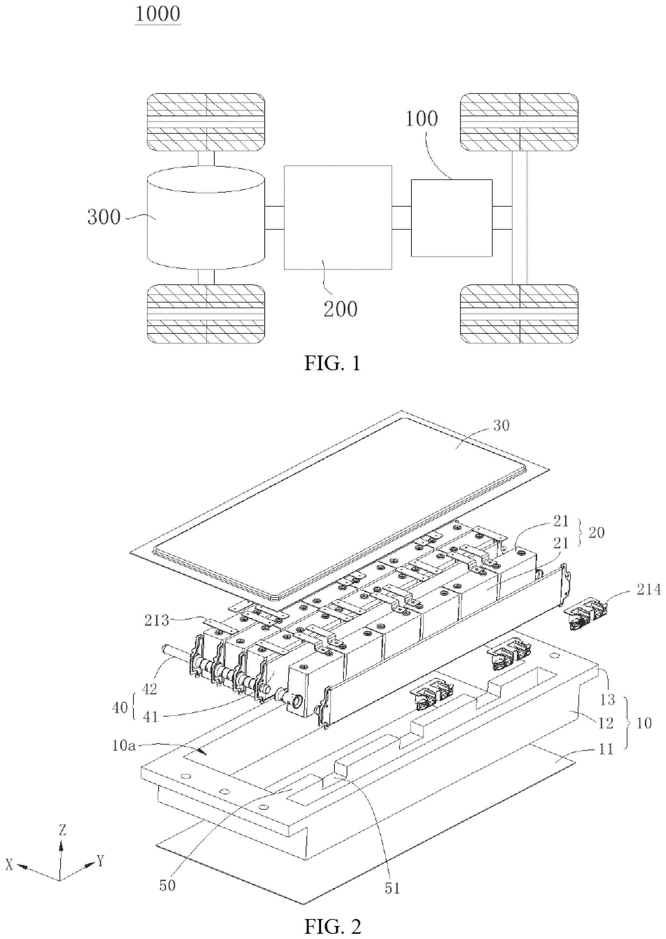

Referring to FIG. 1, FIG. 1 is a schematic structural diagram of a vehicle 1000 according to some embodiments of the present application. The vehicle 1000 may be a fuel vehicle, a gas vehicle, or a new energy vehicle. The new energy vehicle may be a battery electric vehicle, a hybrid electric vehicle, or an extended-range vehicle, etc. A battery 100 is provided inside the vehicle 1000, and the battery 100 may be arranged at the bottom, the front or the back of the vehicle 1000. The battery 100 may be used for power supply for the vehicle 1000. For example, the battery 100 may serve as a power source for operating the vehicle 1000. The vehicle 1000 may further comprise a controller 200 and a motor 300, and the controller 200 is configured to control the battery 100 to supply power to the motor 300, for example, to satisfy the operating power requirements during starting, navigation and traveling of the vehicle 1000.

In some embodiments of the present application, the battery 100 can not only serve as a power source for operating the vehicle 1000, but also serve as a power source for driving the vehicle 1000, instead of or partially instead of fuel or natural gas, to provide driving power for the vehicle 1000.

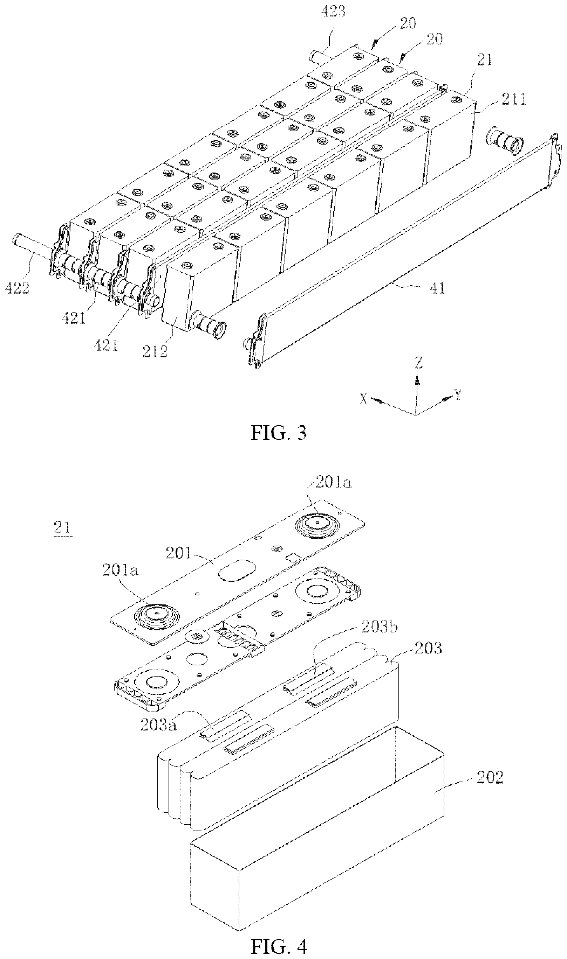

Referring to FIGS. 2 and 3, an embodiment of the present application provides a battery 100, comprising a case 10, battery modules 20, and a thermal management assembly 40. The battery modules 20 are arranged inside the case 10. Two or more battery modules 20 are provided and are arranged in a first direction X, and each of the battery modules 20 comprises two or more battery cells 21 arranged in a second direction Y. The second direction Y is perpendicular to the first direction X. Each of the battery cells 21 each comprises a first side wall 211 and a second side wall 212, and the first side wall 211 is a wall of all outer walls of the battery cell 21 that has the largest area. The first direction X is perpendicular to the first side wall 211, and the second side walls 212 of two adjacent battery cells 21 are oppositely arranged in the second direction Y. The thermal management assembly 40 comprises two or more heat exchange plates 41 distributed in the first direction X, wherein the heat exchange plates 41 are connected to the first side walls 211 of the battery cells 21 to adjust the temperature of the battery cells 21.

In the embodiment of the present application, the second direction Y is perpendicular to the first direction X. Optionally, the first direction X may be a length direction of the case 10, and correspondingly, the second direction Y is a width direction of the case 10. Of course, the first direction X may also be the width direction of the case 10, and correspondingly, the second direction Y is the length direction of the case 10.

The case 10 may be of a simple three-dimensional structure such as a single cuboid or cylinder, or of a complex three-dimensional structure composed of simple three-dimensional structures such as a cuboid or a cylinder, which will not be limited in the embodiments of the present application. The case 10 may be made of an alloy such as an aluminum alloy and an iron alloy, or a polymer material such as polycarbonate and polyisocyanurate foam plastics, or a composite material such as glass fibers plus epoxy resin, which will not be limited in the embodiments of the present application.

The case 10 is configured to accommodate the battery cells 21, and the case 10 may be of various structures to hermetically protect the battery modules 20.

In the battery 100, one or more battery cells 21 may be provided. If a plurality of battery cells 21 are provided, the plurality of battery cells 21 may be connected in series, in parallel, or in series-parallel. The series-parallel connection refers that some of the plurality of battery cells 21 are connected in series and the rest are connected in parallel. The plurality of battery cells 21 may be directly connected together in series, or in parallel, or in series-parallel, and then a unit composed of the plurality of battery cells 21 is accommodated inside the case 10. Of course, the plurality of battery cells 21 may also be first in series connection or parallel connection or series-parallel connection to form a battery module 20, and a plurality of battery modules 20 are in series connection or parallel connection or series-parallel connection to form a unit and are accommodated inside the case 10.

In the present application, the battery cells 21 may include a lithium-ion battery cell 21, a sodium-ion battery cell 21, or a magnesium-ion battery cell 21, etc., which will not be limited in the embodiments of the present application. The battery cells 21 may be flat, cuboid, or in other shapes, which will also not be limited in embodiments of the present application. The battery cells 21 generally classified into three types depending on the way of package: cylindrical battery cells 21, prismatic battery cells 21 and pouch battery cells 21, which will also not be limited in the embodiments of the present application. However, for the sake of brevity, the following embodiments will be described by taking the prismatic battery cells 21 as an example.

Referring to FIG. 4, the battery cell 21 refers to the smallest unit of the battery 100. The battery cell 21 comprises an end cap 201, a housing 202, and an electrode assembly 203.

The end cap 201 refers to a component that covers an opening of the housing 202 to isolate internal environment of the battery cell 21 from external environment. Without limitation, the end cap 201 may be shaped to adapt to the shape of the housing 202 so as to fit with the housing 202. Optionally, the end cap 201 may be made of a material (e.g., an aluminum alloy) with certain hardness and strength, and thus the end cap 201 would not easily deform when subjected to squeezing or collision, so that the battery cell 21 can have a higher structural strength, and the safety performance can also be improved. Functional components, such as electrode terminals 201a, may be arranged on the end cap 201. The electrode terminal 201a may be configured to electrically connect the electrode assembly 203 to output or input electric energy of the battery cell 21. In some embodiments, the end cap 201 may also be provided with a pressure relief mechanism for releasing an internal pressure of the battery cell 21 when the internal pressure or the temperature of the battery cell reaches a threshold. The end cap 201 may also be made of various materials, such as copper, iron, aluminum, stainless steel, an aluminum alloy and plastic, which is not specially limited in the embodiments of the present application. In some embodiments, an insulating member may be further provided on an inner side of the end cap 201. The insulating member may be used to isolate electrical connection components inside the housing 202 from the end cap 201 in order to reduce the risk of short circuiting. For example, the insulating member may be made of plastic, rubber, etc.

The housing 202 is an assembly for fitting the end cap 201 to form the internal environment of the battery cell 21. The formed internal environment may be used to accommodate the electrode assembly 203, an electrolyte (not shown in the figures) and other components. The housing 202 and the end cap 201 may be independent components, and the housing 202 may be provided with an opening which the end cap 201 covers to create the internal environment of the battery cell 21. Without limitation, the end cap 201 may also be integrated with the housing 202. Specifically, the end cap 201 and the housing 202 may first form a common connecting surface before other components are placed into the housing, and then the end cap 201 covers the housing 202 when the interior of the housing 202 needs to be enclosed. The housing 202 may be of various shapes and various sizes, for example, in the form of a cuboid, etc. Specifically, the shape of the housing 202 may be determined depending on the specific shape and size of the electrode assembly 203. The housing 202 may be made of various materials, such as copper, iron, aluminum, stainless steel, an aluminum alloy, and plastic, which will not be particularly limited in the embodiments of the present application.

The electrode assembly 203 is a component in which an electrochemical reaction occurs in the battery cell 21. The housing 202 may contain one or more electrode assemblies 203 therein. The electrode assembly 203 is mainly formed by winding or stacking a positive electrode plate and a negative electrode plate, and a separator is generally arranged between the positive electrode plate and the negative electrode plate. The portions of the positive electrode plate and the negative electrode plate that have an active material form a main body portion of the electrode assembly 203, and the portions of the positive electrode plate and the negative electrode plate that have no active material each form a tab. A positive electrode tab 203a and a negative electrode tab 203b may be both located at one end of the main body portion or respectively at two ends of the main body portion. During the charging and discharging of the battery 100, a positive active material and a negative active material react with the electrolyte, and the tabs are connected to the electrode terminals 201a to form a current loop.

Still referring to FIGS. 3 and 4, the battery 100 according to the embodiment of the present application further comprises a thermal management assembly 40. The thermal management assembly 40 comprises two or more heat exchange plates 41 distributed in the first direction X, wherein the heat exchange plates 41 are connected to the first side walls 211 of the battery cells 21 to adjust the temperature of the battery cells 21.

Optionally, two heat exchange plates 41 may be provided, and of course, more heat exchange plates may also be provided.

Optionally, each heat exchange plate 41 may be connected to the first side walls 211 of the battery cells 21, that is, in the first direction X, a battery module 20 is sandwiched between two adjacent heat exchange plates 41, and with this arrangement, battery cells 21 in contact with the heat exchange plates are thermally managed. In addition, since the first side wall 211 is a wall of all outer walls of each battery cell 21 that has the largest area, the contact area between the heat exchange plate 41 and the battery cell 21 can be increased, which is beneficial to improve the thermal management efficiency of the battery cell 21.

Each of the battery cells 21 may have two first side walls 211, that is, the two first side walls 211 of each of the battery cells 21 each are connected to a heat exchange plate 41, so as to better increase the thermal management efficiency and ensure the temperature stability of the battery cell 21.

The thermal management should be understood as that heat between the heat exchange plates 41 and the battery cells 21 can be transferred therebetween. For example, the heat exchange plate 41 is in direct contact with the battery cell 21 to realize contact heat exchange, or a heat conducting structure (such as a thermally conductive adhesive) is arranged between the heat exchange plate 41 and the battery cell 21 for heat exchange. Specifically, the thermal management assembly 40 cools or heats the battery cells 21 by means of the heat exchange plates 41, and controls the temperature of the battery cells 21 within an appropriate range to improve the service life and safety performance of the battery cells 21. Moreover, when a battery cell 21 is subjected to thermal runaway, heat generated by the battery cell 21 subjected to thermal runaway is taken away by the heat exchange plate 41 in contact with the battery cell, so that the temperature of the battery cell 21 subjected to thermal runaway is reduced, and an adjacent battery cell 21 is prevented from being also subjected to thermal runaway, thus ensuring the safety performance of the battery cell 21.

For example, a battery module 20 is sandwiched between two adjacent heat exchange plates 41, and each heat exchange plate 41 is connected to a side wall 211 of the battery cell 21. It may be understood that one battery module 20 can exchange heat with two heat exchange plates 41, which is beneficial to improve the thermal management efficiency and improve the safety and reliability of the battery cell 21.

For example, a heat exchange plate 41 is also arranged between the case 10 and the outermost battery module 20, that is, the battery module 20 in which the first side walls 211 of the battery cells 21 are arranged close to the case 10 in the first direction X, so that the thermal management efficiency can be increased, and contact between the battery cells 21 and the case 10 can also be prevented, thereby preventing electrical connection or thermal runaway. In addition, the heat exchange plate 41 can also provide support and protection for the battery cells 21, thus increasing the structural strength.

It may be understood that the number of heat exchange plates 41 is greater than the number of battery modules 20, so as to better increase the thermal management efficiency and the structural strength and prevent thermal runaway.

Optionally, in a height direction Z, the heat exchange plates 41 may have the same height as the battery cells 21, and of course, may be configured differently from the battery cells in respect to height.

Optionally, the heat exchange plates 41 are configured as high as the battery cells 21 to increase a connection area between the heat exchange plates 41 and the first side walls 211, so that the heat exchange plates 41 can better exchange heat with the battery cells 21, thereby improving the thermal management effect of the thermal management assembly 40 and improving the safety and reliability of the battery 100.

Optionally, the heat exchange plates 41 are configured differently from the battery cells 21 in respect to height, that is, an extended length of the heat exchange plate 41 in the height direction Z exceeds the height of the battery cell 21. In this configuration, not only the thermal management effect can be improved, but also the heat exchange plate 41 can support the battery cell 21 to prevent a force resulting from an external collision and vibration from directly acting on the battery cell 21, so that the protection of the battery cell 21 can be improved, and the structural strengths of the battery cell 21 and the heat exchange plate 41 can be enhanced by each other, thereby increasing the structural strength of the battery 100.

The configuration of the structure of the battery 100 as described above enables the integration of a structural strength function into the thermal management assembly 40, which is beneficial to improving the space utilization of the case 10 while meeting the requirements of thermal management and structural strength. The arrangements of the transverse and longitudinal beams inside the case 10 can be eliminated, high integration is achieved, an increase in the energy density is facilitated, a manufacturing process is simplified, the production cost is reduced, and the overall lightweight design of the battery 100 is facilitated.

Moreover, the structural strength function is integrated into the thermal management assembly 40, and the heat exchange plates are arranged inside the case 10 and are distributed spaced apart from each other, which can prevent the risk of damages or even liquid leakage of the heat exchange plate 41 caused by working conditions such as vibration or collision when the heat exchange plate 41 is arranged on only one side inside the case 10, thus ensuring the safety performance of the battery 100.

In the battery 100 according to the embodiment of the present application, with the arrangement of the thermal management assembly 40, the two or more heat exchange plates 41 comprised by the thermal management assembly are connected to the first side walls 211 of the battery cells 21 to adjust the temperature of the battery cells 21, so as to meet the requirement of thermal management of the battery cells 21. In addition, the heat exchange plates 41 of the thermal management assembly 40 can be used as structural parts of the case 10 to increase the structural strength of the entire battery 100, thereby eliminating the arrangements of the transverse and longitudinal beams inside the case 10, achieving high integration, reducing the cost, improving the space utilization of the case 10, and realizing the lightweight design. Moreover, since the first side wall 211 is a wall of all outer walls of the battery cell 21 that has the largest area, the heat exchange plate 41 can better exchange heat with the battery cell 21 to increase the thermal management efficiency. In addition, two or more heat exchange plates 41 are provided and 1 are connected to the first side walls 211 of the battery cells 21, that is, the heat exchange plates 41 are arranged inside the case 10 instead of only on one side of the case 10, so that damages or even liquid leakage of the heat exchange plates 41 caused by working conditions such as collision and vibration can be prevented, which is beneficial to improve the service life, safety and reliability of the heat exchange plates 41, thereby increasing the thermal management efficiency of the battery cells 21 and further ensuring the safety performance of the battery 100.

In the battery 100 according to the embodiment of the present application, with the above-mentioned structural form, during forming, the second side walls 212 of the battery cells 21 of the same battery module 20 may be first oppositely arranged to form two or more battery modules 20. Then the heat exchange plates 41 are connected to the first side walls 211 of adjacent battery cells 21, so that the heat exchange plates 41 and the battery modules 20 are stacked to form a unit and are placed in the case 10, and the case 10 is closed to complete the preparation of the battery 100. In this forming way, the space utilization of the case 10 can be improved and the lightweight design can be realized while the requirements of thermal management and structural strength can be met, and the preparation is simple and the forming is facilitated.

Optionally, during the above forming, a heat exchange plate 41 may be connected to the first side wall 211 of each battery cell 21 of each battery module 20, that is, the heat exchange plate 41 and the battery module 20 are stacked to form a unit to be placed into the case 10, and the battery module 21 is connected to the case 10 by means of the heat exchange plate 41, so as to better protect the safety of the battery cells 21.

In some embodiments, the heat exchange plates 41 are bonded and fixed to the first side walls 211 of the battery cells 21.

In this configuration, the connection between the heat exchange plates 41 and the battery cells 21 is more robust and the connection stability is good to ensure that the entire battery 100 has a certain rigidity and strength. In addition, consumables and the overall weight are reduced, which is beneficial to the lightweight design of the battery 100. Further, the bonding can further simplify the manufacturing process and increase the production efficiency and assembly efficiency.

Optionally, a connecting adhesive layer may be arranged between the heat exchange plate 41 and the first side walls 211, such that the heat exchange plate 41 is bonded and fixed to the battery cells 21.

Optionally, the connecting adhesive layer may comprise a thermally conductive structural adhesive, which not only provide a good bonding effect, but also has properties of heat-conducting function, aging resistance, fatigue resistance, corrosion resistance, etc., and can increase the connection strength and thermal management efficiency of the battery cells 21 and the heat exchange plate 41, so that the heat transfer between the battery cells 21 and the heat exchange plate 41 is faster. Of course, the connecting adhesive layer further comprises a double-sided adhesive tape, etc.

Moreover, the battery cells 21 and the heat exchange plate 41 are connected as one piece by bonding, which also allows adjacent battery modules 20 to be arranged more compactly, so as to improve the space utilization of the case 10.

In some embodiments, the heat exchange plate 41 is sandwiched between two adjacent battery modules 20.

In this configuration, the first side wall 211 of each battery cell 21 of two adjacent battery modules 20 are connected to the heat exchange plate 41, so that the thermal management efficiency of the battery cells 21 and the structural strength of the entire battery 100 can be better increased.

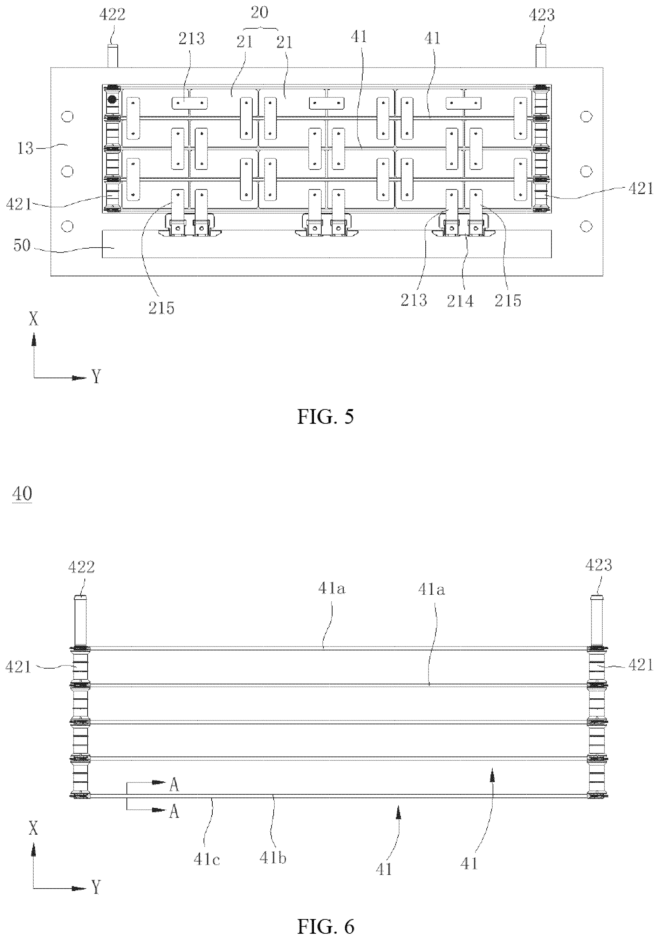

Referring to FIGS. 2-6, in some embodiments, the thermal management assembly 40 further comprises a connecting pipe set 42, wherein the heat exchange plates 41 each are internally provided with a medium flow channel 41a, and the connecting pipe set 42 is configured for communication between the medium flow channels 41a of the two or more heat exchange plates 41.

The connecting pipe set 42 is an assembly for connecting the medium flow channels 41a of the heat exchange plates 41, and can be connected to an external apparatus for providing a heat exchange medium. The heat exchange medium enters or exits the medium flow channel 41a of each heat exchange plate 41 through the connecting pipe set 42 to perform heat exchange management on each battery cell 21.

With the arrangement of the connecting pipe set 42 and the communication between the medium flow channels 41a of the two or more heat exchange plates 41 by means of the connecting pipe set 42, it is unnecessary for each heat exchange plate 41 to be correspondingly provided with a pipeline directly connected to the apparatus for providing the heat exchange medium, and the structure of the thermal management assembly 40 can be simplified and the space utilization of the case 10 can be improved while the requirement of providing the heat exchange medium for each heat exchange plate 41 for effective thermal management of each battery cell 21 is met.

Optionally, the connecting pipe set 42 may be arranged between the second side walls 212 of the battery cells 21 and the case 10, and the medium flow channels 41a of the heat exchange plates 41 are configured to communicate with each other, so as to realize the thermal management of the battery cells 21.

In some embodiments, the connecting pipe set 42 comprises a connecting channel 421, an inlet pipe 422, and an outlet pipe 423. In the first direction X, the medium flow channels 41a of two adjacent heat exchange plates 41 are in communication with each other by means of the connecting channel 421, and the inlet pipe 422 and the outlet pipe 423 are in communication with the same heat exchange plate 41.

Optionally, the heat exchange medium can flow into the thermal management assembly 40 through the inlet pipe 422, and enter the medium flow channel 41a of each heat exchange plate 41 through the connecting channel 421; and the heat exchange medium flows in the medium flow channel 41a to the connecting channel 421 on the other side, and flows to the outlet pipe 423 through the connecting channel 421 to flow out of the thermal management assembly 40. In this configuration, the thermal management of the battery cells 21 is completed, the thermal management requirements are met, and the safety performance of the battery cells 21 is ensured.

In this configuration, the demand of the heat exchange plates 41 for the heat exchange medium can be met only by means of one inlet pipe 422 and one outlet pipe 423, which reduces a space occupancy rate of the connecting pipe set 42, can simplify the structure of the connecting pipe set 42, facilitates assembly and replacement, may be suitable for supplying the heat exchange media for different numbers of heat exchange plates 41, and improves the flexibility and universality.

Optionally, the connecting channel 421, the inlet pipe 422 and the outlet pipe 423 may be arranged on the same side of the heat exchange plates 41 extending in the second direction Y, or of course, may be respectively arranged on two sides of the heat exchange plates 41 extending in the second direction Y.

Optionally, an extension direction of the inlet pipe 422 and an extension direction of the outlet pipe 423 may be the same or different.

Optionally, a connecting channel 421 is arranged on each side of one heat exchange plate 41 extending in the second direction Y, and the connecting channels 421 on the two sides of each heat exchange plate 41 are sequentially connected and are respectively connected to the inlet pipe 422 and the outlet pipe 423, which facilitates assembly and replacement and provides a higher flexibility.

Moreover, the connecting pipe set 42 is configured in the form including the connecting channel 421, the inlet pipe 422 and the outlet pipe 423, which can be collocated at will to be suitable for different numbers of heat exchange plates 41, and is beneficial to improve the flexibility and universality.

Optionally, connecting members may be arranged on two sides of the heat exchange plate 41 extending in the second direction Y for connection to the connecting channel 421, so as to increase the connection strength.

In some embodiments, through holes are provided in the case 10, and the inlet pipe 422 and the outlet pipe 423 each extend from the case 10 through the through holes.

In this configuration, one end of the inlet pipe 422 and one end of the outlet pipe 423 extend outside of the case 10. The inlet pipe 422 can be connected to the external apparatus for providing the heat exchange medium, which is beneficial to obtaining and conveying the heat exchange medium to the medium flow channel 41a in the heat exchange plate 41. The outlet pipe 423 can be connected to an external apparatus for storing the heat exchange medium to discharge the heat exchange medium after heat exchange with the battery cells 21, which is beneficial to obtaining and discharging the heat exchange medium, and can reduce the risk of leakage of the heat exchange medium in the case 10, thereby ensuring the safety and reliability of the battery 20.

Optionally, the external apparatus for providing the heat exchange medium and the external apparatus for storing the heat exchange medium may be provided as the same apparatus, or of course, may be two separate apparatuses.

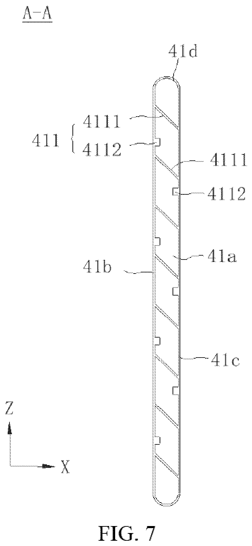

Referring to FIGS. 2-7, in some embodiments, the heat exchange plate 41 has a top wall 41b and a bottom wall 41c that are oppositely arranged in the first direction X, and side walls 41d connected to the top wall 41b and the bottom wall 41c, wherein the medium flow channel 41a is enclosed by the top wall 41b, the bottom wall 41c and the side walls 41d. Under a predetermined pressure, the top wall 41b and the bottom wall 41c can at least partially move close to each other in the first direction X to absorb an expansion force of the battery cells 21.

The medium flow channel 41a is enclosed by the top wall 41b, the bottom wall 41c and the side walls 41d, and the medium flow channel 41a is in communication with the connecting pipe set 42, so that the connecting pipe set 42 can transfer the heat exchange medium into the medium flow channel 41a to exchange heat with the battery cells 21, and the heat exchange medium after heat exchange is transferred through the medium flow channel 41a to the connecting pipe set 42 for flowing out, so as to complete the thermal management of the battery cells 21.

Under a predetermined pressure, the top wall 41b and the bottom wall 41c can at least partially move close to each other in the first direction X, which may be understood as that when the battery cell 21 expand during operation and have an acting force on the heat exchange plate 41 that exceeds the predetermined pressure, the heat exchange plate 41 can deform to absorb an expansion force of the battery cells 21, that is, a cross-sectional area of the heat exchange plate 41 in the first direction X becomes small to improve the safety performance of the battery 100. In addition, the connection between the heat exchange plate 41 and the battery cells 21 can always be kept more compact, thereby increasing the connection strength.

In some embodiments, the heat exchange plate 41 comprises a support assembly 411, and the support assembly 411 is arranged in the medium flow channel 41a. The support assembly 411 comprises a plurality of first support members 4111 distributed spaced apart from each other in a height direction Z of the case 10. The first support members 4111 are each connected to the top wall 41b and the bottom wall 41c, and the first support members 4111 are arranged at an angle and form an included angle less than 90° with one of the top wall 41b and the bottom wall 41c.

The first support members 4111 are distributed spaced apart from each other in the height direction Z. Optionally, a spacing between two adjacent first support members 4111 may be the same or different.

Optionally, the number of the first support members 4111 comprised by the support assembly 411 may be set according to the dimension of the heat exchange plate 41. The support assembly 411 is arranged in the medium flow channel 41a and is configured to support the top wall 41b and the bottom wall 41c to meet the requirement of supporting the top wall 41b and the bottom wall 41c.

The first support members 4111 each are connected to the top wall 41b and the bottom wall 41c. It may be understood that when the heat exchange plate 41 is deformed to absorb the expansion force of the battery cells 21, the first support members 4111 can be deformed to adapt to the top wall 41b and the bottom wall 41c being capable of at least partially moving close to each other in the first direction X.

The first support members 4111 are arranged at an angle, and form an included angle set to be less than 90° with one of the top wall 41b and the bottom wall 41c, so that bending performance of the first support members 4111 can be improved, and the first support members can be better deformed to meet the requirement of absorbing the expansion force by the heat exchange plate 41, thereby preventing less deformation resulting from a horizontal and straight form and the risk of proneness to fracture failure.

For example, the included angle between the first support members 4111 and one of the top wall 41b and the bottom wall 41c is set within a value range from 30° to 60°, which is conducive to deformation while the support requirement is better met, and is less prone to fracture.

Optionally, two adjacent first support members 4111 may be inclined in the same direction or different directions.

Optionally, the first support members 4111 may be made of a reinforcing rib structure, so as to realize the lightweight design of the heat exchange plate 41 while ensuring the supporting effect, thereby realizing the lightweight design of the entire battery 100.

Optionally, the first support members 4111 are connected to the top wall 41b and the bottom wall 41c and extend in the second direction Y to increase the connection area between the first support members 4111 and the top wall 41b and the bottom wall 41c and increase the support strength.

In some embodiments, the first support members 4111 are of a plate-like structure.

The first support members 4111 are provided as a flat plate-like structure such that the first support members can be better deformed to meet the requirement of absorbing the expansion force of the battery cells 21 by the heat exchange plate 41.

Moreover, this facilitates the production and machining and increases the manufacturing efficiency.

In some embodiments, the support assembly 411 further comprises a plurality of second support members 4112 distributed spaced apart from each other in the height direction Z of the case 10, an extension dimension of each of the second support members 4112 in the first direction X is less than a distance between the top wall 41b and the bottom wall 41c, and the second support member 4112 is connected to at least one of the top wall 41b and the bottom wall 41c.

Optionally, the second support member 4112 may be arranged on the top wall 41b and may also be arranged on the bottom wall 41c. As an example, both the top wall 41b and the bottom wall 41c are provided with second support members 4112.

For example, in the height direction Z, a second support member 4112 is arranged between two adjacent first support member 4111. Optionally, one of two adjacent second support members 4112 is arranged on the top wall 41b, and the other is arranged on the bottom wall 41c, so as to ensure that the top wall 41b and the bottom wall 41c are uniformly stressed without bearing too much weight.

By arranging the second support members 4112 and setting their extension dimensions in the first direction X to be less than the distance between the top wall 41b and the bottom wall 41c, the second support members can act with the first support member 4111 to achieve a better supporting effect, and can also control the deformation range of the heat exchange plate 41. When the second support members 4112 on one of the top wall 41b and the bottom wall 41c come into contact with the other of the top wall and the bottom wall, the deformation of the heat exchange plate 41 can be further limited, which avoids the blockage of the medium flow channel 41a, and ensures the effectiveness of the medium flow channel 41a and thus the effectiveness of the heat exchange plate 41.

In some embodiments, the second support members 4112 are in the form of a polygon prism.

The second support members 4112 are provided as a polygon prism, such that the second support members 4112 have a sufficient cross-sectional area. When the heat exchange plate 41 absorbs the expansion force of the battery cells 21 and deforms until the second support members 4112 arranged on the top wall 41b or the bottom wall 41c come into contact with the other wall, the second support members 4112 can have a sufficient contact area so as to better increase the support capacity and prevent the second support members 4112 from being damaged or even failing which otherwise cause the top wall 41b to come into contact with the bottom wall 41c, thereby ensuring the effectiveness of the heat exchange plate 41.

Optionally, the second support members 4112 are arranged perpendicular to the top wall 41b and the bottom wall 41c, so as to better ensure their supporting effect on the heat exchange plate 41 and ensure that the medium flow channel 41a will not be blocked.

In some embodiments, the first support members 4111 and the second support members 4112 are alternately distributed in the height direction Z of the case 10.

The first support members 4111 and the second support members 4112 are alternately distributed. Optionally, two adjacent second support members 4112 may be alternately arranged on the top wall 41b and the bottom wall 41c. Of course, the positions of the second support members 4112 may also be arranged based on a certain arrangement rule.

For example, in the height direction Z, one of two adjacent second support members 4112 is arranged on the top wall 41b, and the other is arranged on the bottom wall 41c, so as to ensure that the top wall 41b and the bottom wall 41c are uniformly stressed without bearing excess weight.

In this configuration, the uniformity of the supporting effect on the top wall 41b and the bottom wall 41c of the heat exchange plate 41 can be ensured, and each section of a cooling channel in the second direction Y will not be blocked, which can better ensure the effectiveness of the medium flow channel 41a.

Still referring to FIGS. 2 to 5, in some embodiments, the battery 100 further comprises a limiting member 50 arranged inside the case 10 and fixedly connected to the case 10, wherein the limiting member 50 is configured to limit the deformation of the battery cells 21 in the first direction X.

The arrangement of the limiting member 50 allows to provide positioning of the battery module 20 and the thermal management assembly 40, which facilitates accurate and rapid mounting of the battery module 20 and the thermal management assembly 40 in the case 10 in preset positions, prevents deviation during mounting which otherwise makes it impossible to accurately mount other components, and increases the mounting efficiency and mounting accuracy, thus ensuring good quality of the battery 100. Moreover, the limiting member 50 is fixedly connected to the case 10, and can also act as a structural member of the case 10 to meet the requirement of structural strength, and high integration is provided.

Moreover, the deformation of the battery cells 21 in the first direction X can also be restricted to protect the operation safety of the battery cells 21, thereby ensuring the safety performance of the battery 100.

Optionally, the limiting member 50 and the case 10 may be of an integrally formed structure which is formed by processes such as bending, stamping, etc. Of course, the limiting member 50 and the case 10 may also be provided separately, and then connected as one piece by means of welding, bonding, etc.

Optionally, one or two limiting members 50 may be provided, or of course, more limiting members may be provided.

In some embodiments, a ratio of a height dimension of the limiting member 50 to a height dimension of the battery cell 21 is set between 2/3 and 11/10, including the two end values of 2/3 and 11/10, which can not only meet the requirement of a structural strength function and a deformation resistance effect, but also save space and improve the space utilization.

In some embodiments, the limiting member 50 comprises a limiting beam which extends in the second direction Y, two ends of the limiting beam in the second direction Y are connected to the case 10, and the limiting beam abuts against the heat exchange plate 41 and is connected to the heat exchange plate 41.

The limiting member 50 being provided in the form of the limiting beam is conducive to saving a space for arranging the limiting beam, allows the case 10 to accommodate more battery cells 21, and improves the internal space utilization of the case 10.

For example, the cross-sectional area of each section of the limiting beam in the height direction Z is the same, which is beneficial to production and saves the internal space of the case 10.

The limiting beam abuts against the heat exchange plate 41 and is connected to the heat exchange plate 41 to provide a supporting effect, and the limiting beam and the heat exchange plate 41 can jointly function to enhance the structural strength and resist the deformation of the battery cells 21.

Still referring to FIGS. 2 to 5, in some embodiments, the battery cell 21 further comprises a busbar member 213 and two output members 215, wherein the busbar member 213 is configured to electrically connect two adjacent battery cells 21, and the two output members 215 are arranged on the same side in the first direction X. The battery module 21 located on the outermost side in the first direction X is provided with two output ends. The two output ends are distributed in the second direction Y, and the two output members 215 are respectively electrically connected to the two output ends to form a power supply path together with the busbar member 213.

Optionally, one or two busbar members 213 may be provided, or of course, more busbar members may be provided.

Two adjacent battery cells 21 can be electrically connected to each other by means of the busbar member 213. Optionally, the busbar member 213 may be connected to electrode terminals 201a on adjacent battery cells 21, such that a plurality of battery cells 21 of the same battery module 20 or of two adjacent battery modules 20 can be connected in series or in parallel or in series-parallel.

The battery module 21 located on the outermost side in the first direction X is provided with two output ends, and the two output ends are two electrode terminals 201a that are not connected to the busbar member 213.

The two output members 215 are respectively electrically connected to the two output ends and are arranged on the same side in the first direction X to form a power supply path together with the busbar member 213. In this configuration, the use of a large output member 215 across the battery module 20 can be avoided, and the compactness and energy density of the battery 100 are improved.

Optionally, the output members 215 may shaped as a bent plate or another form, which is not limited in the present application.

In some embodiments, the two output ends are respectively arranged on two battery cells 21 of the outermost battery module 20 that are located at ends in the second direction Y.

In this configuration, it is conducive to ensuring that the two output members 215 are arranged on the same side in the first direction X, so that the two output members 215 and the two output ends form output interfaces to be connected to an external power consuming device.

In some embodiments, an output member base 214 is provided on the limiting member 50, and the output member base 214 is arranged on the limiting member 50 to support the output members 215. Optionally, the output member base 214 comprises an insulating material.

In this configuration, the mounting and fixation of the output member 215 are facilitated, and contact short circuit can also be avoided, thereby ensuring the safety performance of the battery 100.

In some embodiments, an accommodating notch 51 is provided in the limiting member 50, and the output member base 214 at least partially extends into the accommodating notch 51.

Optionally, one or two accommodating notches 51 may be provided, or of course, more accommodating notches may be provided. Optionally, the accommodating notch 51 may be shaped to fit the output member base 214, and the accommodating notch 51 can allow the output member base 214 to be correctly placed therein for limiting the output member base from being displaced.

The accommodating notch 51 can function to limit the output member base 214 to prevent the output member base from being displaced, which otherwise causes safety problems of the battery 100. In addition, the accommodating notch can also have the function of positioning to facilitate the mounting of the output member base 214 and improve the manufacturing efficiency.

Optionally, the accommodating notches 51 and the output member bases 214 may be in a one-to-one correspondence or may be configured in a one-to-many correspondence in terms of number, that is, a plurality of output member bases 214 may be arranged in the same accommodating notch 51.

For example, the limiting member 50 is provided with two or more accommodating notches 51, and the two or more accommodating notches 51 are arranged spaced apart from each other.

Optionally, the accommodating notch 51 may be formed by punching, that is, the accommodating notch 51 can be quickly formed in the limiting member 50, and the process is simple. In addition, the material can also be saved, which is beneficial to realize the lightweight design.

Still referring to FIGS. 2 to 5, in some embodiments, the case 10 comprises a top cover 30, a bottom cover 11 and an accommodating frame 12, wherein the bottom cover 11 and the top cover 30 are oppositely arranged at two ends of the accommodating frame 12 in the height direction Z of the case 10, and the limiting member 50 is connected to the accommodating frame 12 and at least one of the bottom cover 11 and the top cover 30.

The case 10 for accommodating the battery cells 21 are jointly enclosed by the top cover 30, the bottom cover 11 and the accommodating frame 12 to meet the sealing requirement.

Optionally, the accommodating frame 12 may have an opening 10a. Optionally, the accommodating frame 12 may be provided with an opening 10a on one side, that is, the accommodating frame 12 is formed integrally with one of the top cover 30 and the bottom cover 11, and the other of the top cover and the bottom cover closes the opening 10a and is connected to the accommodating frame 12 for enclosing the case 10, so as to hermetically protect the battery module 20. Of course, the accommodating frame 12 may also be provided with an opening 10a on either side, and the top cover 30 and the bottom cover 11 are used to seal the two openings 10a and be connected to the accommodating frame 12 for enclosing the case 10, so as to hermetically protect the battery module 20.

In order to improve the sealing performance of the accommodating frame 12 connected to the top cover 30 and the bottom cover 11, a sealing member, such as a sealant and a seal ring, etc., may be arranged between the accommodating frame 12 and the top cover 30 or the bottom cover 11.

Optionally, the top cover 30, the bottom cover 11 and the accommodating frame 12 may be connected by means of bolts, flowdrill screws (FDS), bonding, welding, etc., which is not limited in the present application.

Optionally, the top cover 30 or the bottom cover 11 may be made of a material with a certain high stiffness and high strength (such as an aluminum alloy), and thus is less prone to deformation and has a higher structural strength, so as to improve the safety performance.

For example, at least part of the top cover 30 can be recessed in the height direction Z to form a recess, the heat exchange plates 41 may be connected to the recess, and there is a gap between the recess and the battery cells 21. When working conditions such as collision, vibration, etc., occur, the recess can better absorb an acting force on the heat exchange plates 41, so as to improve the safety and reliability.

Optionally, a protective layer may also be provided in the gap. With the arrangement of the protective layer, the top cover 30 can be prevented from being burnt out during thermal runaway of the battery cells 21.

Optionally, the bottom cover 11 and the accommodating frame 12 may be of an integrally formed structure, which is formed by processes such as bending, stamping, etc. to form the case 10. Of course, the bottom cover 11 and the accommodating frame 12 may also be provided separately, and then connected as one piece by means of welding, bonding, etc.

For example, the bottom cover 11 is detachably connected to the accommodating frame 12, which can reduce the cost and facilitate the replacement of the bottom cover 11 or the accommodating frame 12 when an issue such as damage occur.

Optionally, the bottom cover 11 and the accommodating frame 12 may be made of the same material, or of course, may be made of different materials.

In some embodiments, the bottom cover 11 may be made of a material with a stronger strength than the material of the accommodating frame 12, which is beneficial to absorbing an external impact force to provide an effect of buffering the battery 100, and prevent the battery 100 from being subjected to deformation and failure during vibration, impact, etc., so as to improve the safety and reliability of the battery 100 and further increase the overall structural strength of the battery 100 to adapt to various working conditions.

Optionally, the bottom cover 11 may also be provided with a reinforcing rib structure, which can better increase the structural strength of the battery 100.

Optionally, the limiting member 50 may be connected to the accommodating frame 12 and the bottom cover 11, or of course, may be connected to the accommodating frame 12 and the top cover 30, or of course, may be connected to the accommodating frame 12, the top cover 30 and the bottom cover 11. In this configuration, the overall structure of the battery 100 can be configured according to different requirements, thus improving the universality.

In some embodiments, the case 10 further comprises a connecting seat 13, wherein the connecting seat 13 is arranged protruding from the accommodating frame 12 in the second direction Y, and the connecting seat 13 is configured to mount the battery 100 in a power consuming device.

With the arrangement of the connecting seat 13, the connection and fixation of the entire battery 100 in the power consuming device in which the battery is applied are facilitated. For example, the battery is fixed to a chassis of the vehicle 1000, or the like, to improve the connection stability and make the connection more robust. In addition, the safety risk issue of the battery 100 caused by connection failure is avoided, thereby ensuring the safety and reliability of the battery 100.

Optionally, the connecting seat 13 is arranged protruding from one side of the accommodating frame 12 in the second direction Y. Of course, the accommodating frame 12 is provided with a protruding connecting seat 13 on each side in the second direction Y.

In a second aspect, an embodiment of the present application provides a power consuming device, comprising a battery 100 according to any one of the foregoing implementations. The battery 100 is configured to provide electric energy to allow the power consuming device to operate normally.

It should be noted that the power consuming device according to the embodiment of the present application has the beneficial effects of the battery 100 according to any one of the foregoing implementations. For details, reference may be made to the description of the beneficial effects of the battery 100, which will not be repeated in the embodiments of the present application.

It should be noted that the embodiments in the present application and features in the embodiments may be combined with each other without conflicts.

Finally, it should be noted that the above embodiments are merely used for illustrating rather than limiting the technical solutions of the present application. Although the present application has been illustrated in detail with reference to the foregoing embodiments, it should be understood by those of ordinary skill in the art that the technical solutions described in the foregoing embodiments may still be modified, or some of the technical features therein may be equivalently substituted, but these modifications or substitutions do not make the essence of corresponding technical solutions depart from the spirit and scope of the technical solutions of the embodiments of the present application.

## Claims

1. A battery, comprising:
a case;
battery modules arranged inside the case, wherein two or more battery modules are provided and are arranged in a first direction, each of the battery modules comprises two or more battery cells arranged in a second direction, the second direction is perpendicular to the first direction, each of the battery cells comprises a first side wall and a second side wall connected to each other, the first side wall is a wall of all outer walls of the battery cell that has the largest area, the first direction is perpendicular to the first side wall, and the second side walls of two adjacent battery cells are oppositely arranged in the second direction; and
a thermal management assembly comprising two or more heat exchange plates distributed in the first direction, wherein the heat exchange plates are connected to the first side walls of the battery cells to adjust the temperature of the battery cells.

2. The battery according to claim 1, wherein the heat exchange plates are bonded and fixed to the first side walls of the battery cells.

3. The battery according to claim 1 or 2, wherein the heat exchange plates are sandwiched between two adjacent battery modules.

4. The battery according to claim 3, wherein the thermal management assembly further comprises a connecting pipe set, the heat exchange plates each being internally provided with a medium flow channel, and the connecting pipe set being configured for communication between the medium flow channels of the two or more heat exchange plates.

5. The battery according to claim 4, wherein the connecting pipe set comprises a connecting channel, an inlet pipe, and an outlet pipe, wherein in the first direction, the medium flow channels of two adjacent heat exchange plates are in communication with each other by means of the connecting channel, and the inlet pipe and the outlet pipe are in communication with the medium flow channel of the same heat exchange plate.

6. The battery according to claim 5, wherein through holes are provided in the case, and the inlet pipe and the outlet pipe each extend from the case through the through holes.

7. The battery according to claim 4, wherein the heat exchange plate has a top wall and a bottom wall that are oppositely arranged in the first direction and side walls connected to the top wall and the bottom wall, the medium flow channel being enclosed by the top wall, the bottom wall and the side walls; and
under a predetermined pressure, the top wall and the bottom wall are capable of at least partially moving close to each other in the first direction to absorb an expansion force of the battery cells.

8. The battery according to claim 7, wherein the heat exchange plate comprises a support assembly arranged in the medium flow channel, the support assembly comprising a plurality of first support members distributed and spaced apart from each other in a height direction of the case, the first support members each being connected to the top wall and the bottom wall, and the first support members being arranged at an angle and forming an included angle less than 90° with one of the top wall and the bottom wall.

9. The battery according to claim 8, wherein the first support members are of a plate-like structure.

10. The battery according to claim 8, wherein the support assembly further comprises a plurality of second support members distributed and spaced apart from each other in the height direction of the case, an extension dimension of each of the second support members in the first direction being less than a distance between the top wall and the bottom wall, and the second support members being connected to at least one of the top wall and the bottom wall.

11. The battery according to claim 10, wherein the second support members are in the form of a polygon prism.

12. The battery according to claim 10, wherein the first support members and the second support members are alternately distributed in the height direction of the case.

13. The battery according to any one of claims 1-12, further comprising a limiting member arranged inside the case and fixedly connected to the case, wherein the limiting member is configured to limit deformation of the battery cells in the first direction.

14. The battery according to claim 13, wherein the limiting member comprises a limiting beam extending in the second direction, two ends of the limiting beam in the second direction being connected to the case, and the limiting beam abutting against the heat exchange plate and connected to the heat exchange plate.

15. The battery according to claim 13, further comprising a busbar member and two output members, wherein the busbar member is configured to electrically connect two adjacent battery cells, and the two output members are arranged on a same side in the first direction; and
the battery module located on the outermost side in the first direction is provided with two output ends, the two output ends are distributed in the second direction, and the two output members are respectively electrically connected to the two output ends to form a power supply path together with the busbar member.

16. The battery according to claim 15, wherein the two output ends are respectively arranged on two battery cells of the outermost battery module that are located at ends in the second direction.

17. The battery according to claim 15, wherein an output member base is provided on the limiting member, and the output member base is arranged on the limiting member to support the output members.

18. The battery according to claim 17, wherein an accommodating notch is provided in the limiting member, and the output member base at least partially extends into the accommodating notch.

19. The battery according to any one of claims 13-18, wherein the case comprises a top cover, a bottom cover, and an accommodating frame, the bottom cover and the top cover being oppositely arranged at two ends of the accommodating frame in the height direction of the case, and the limiting member being connected to the accommodating frame and at least one of the top cover and the bottom cover.

20. The battery according to claim 19, wherein the case further comprises a connecting seat protruding from the accommodating frame in the second direction, the connecting seat being configured to mount the battery in a power consuming device.

21. A power consuming device, comprising a battery according to any one of claims 1-20, wherein the battery is configured to provide electric energy.
